# EUROPEAN PATENT APPLICATION

(11) **EP 0 581 719 A1**
(43) Date of publication of application: **02.02.1994**
(21) Application number: 93500109.9
(22) Date of filing: 20.07.1993
(51) Int. Cl.: B60T 17/22, B61L 23/00

(54) **Device for detecting the passing of a railway vehicle shaft with the brake applied**

(30) Priority: 23.07.1992 ES 9201542
(71) Applicant: INVESTIGACION Y ASESORAMIENTO TECNICO, S.A.(INVASTESA), E-28014 Madrid (ES)
(72) Inventor: Lopez Gomez, Jose Luis, E-28023 Madrid (ES)
(74) Representative: Elzaburu Marquez, Alberto

(57) **Abstract**

A device for detecting the passing of a railway vehicle shaft with the brake applied, consisting of the realization from a trapezoidal cut (8) on a straight track section (7) which is supported on railway bearers (1,2), inside of which a moving rail section (10) is incorporated, arranged on welded metallic fastenings, relying on a support (9) located on a set of rollers of small diameter offering scarce resistance and on longitudinal flanges (12) to correctly position the moving rail section, and there being arranged a driving spring (11) on the side which is to receive the vehicle (13), and a microbreaker which energises when the rail (10) is longitudinally displaced, the whole assembly being fitted with metallic protections screwed on the longitudinal flanges (12).

## Description

### BACKGROUND OF THE INVENTION

This specification refers to a patent of invention concerning a device for detecting the passing of a railway vehicle shaft with the brake applied, the object of which is to constitute a device allowing to detect the presence of an applied brake in a railway vehicle when one of its wheels passes on the device itself.

### FIELD OF THE INVENTION

This invention applies essentially to the industry devoted to the manufacture of railway vehicles and auxiliary elements thereof.

### RELATED ART

At present, on railway vehicles the recovery system of which is damaged or having a released brake in some of their shafts, it is possible to move them without the engine driver be able to detect the anomaly which is happening, owing to the great potentials which the engine disposes of.

Under these conditions, the shaft movement can create at least a great heating of the brake lining, as well as at the wheel rim or its brake discs, depending of course on the system used, which can be brake on rim or brake on disc.

In case of a remarkable lack of adherence, the wheel slipping on the rail will result in a formation of levels, and, of course, a possible metallurgic degradation of the wheel itself, with the evident risks of later cracking problems.

An obvious solution to this problem would be to rely on a device allowing to detect the passing of a railway vehicle shaft when this would have an applied brake when one of its wheels passes on the device itself.

Nevertheless, nothing is known up-to-date about the existence of such a device having these suitable features.

### SUMMARY OF THE INVENTION

The device for detecting the passing of a railway vehicle shaft with the brake applied of the invention constitutes per se an evident solution to the present problems in this field, since it is capable of allowing to detect the presence of an applied brake of a railway vehicle when one of its wheels passes on it.

In a more specific way, the device for detecting the passing of a railway vehicle shaft with the brake applied, which is the object of the invention, is to be mounted on a straight track section between two preferably wooden rail bearers.

On the existing tracks, which, as above mentioned, must have a straight track section, it is necessary to carry out a trapezoidal cut in the rail.

Once this trapezoidal cut has been made on the rail, this rail section is reinforced by means of welding some plates to join and stiffen the resultant ends of the previous made cut, and on said joining plates, a rail section giving a continuity to the running track, i.e. the track itself, is later laid.

Next, a piece of rail fitting into the previously made cut is installed on the support formed by the plates joining and stiffening the resultant ends of the previously made cut.

This later laid piece will rest on said support via a set of rollers of small diameter offering a scant resistance to the rolling and that, at the same time, will be capable of supporting the passing of the shafts incorporated in a railway vehicle, which can have a weight up to 22 tons.

The set of rollers in housed in a supporting plate, and the moving rail, which is laterally guided by means of plates made of sliding material, is located on said set of rollers.

Later, longitudinal flanges will assure the correct positioning of the moving rail section in its housing.

By means of a driving spring, the moving rail is positioned on the side which is to receive the vehicle to be checked.

Nothing will happen when the vehicle passes on, provided that the wheel turns freely. That is to say, the moving rail will remain immobilized by the small tensioning of the precompression given to the rail, and the rail will not be displaced.

The spring pretensioning can be adjusted, and this adjustment will be always slightly higher than the tangential force generated between the wheel rim and the rail, this force being necessary to overcome the rolling friction.

Nevertheless, when an additional tangential force is created between wheel and rail, this force being motivated due to the fact that the wheel is supporting a braking couple, said force will - overcome the spring pretensioning and a longitudinal displacement of the moving rail section will be created in the sense in which the vehicle moves.

The device has a microbreaker on the supporting plate, and a driving stop fixed to the moving rail so that when a displacement is created on the moving rail, said microbreaker will energise, so obtaining an electrical signal on the screen indicating that, at certain shaft of the railway vehicle there is an anomaly on its braking system.

Lastly, in order to protect the system from harmful weathering agents, and, consequently, to avoid the entry of foreign matters which could affect in a substantial manner the operation, metallic protections screwed on the longitudinal flanges have been provided.

### BRIEF DESCRIPTION OF THE DRAWINGS

In order to complement this description and to aid to a better understanding of the features of the invention, the accompanying drawings, which are a part of this specification, show in an - illustrative but non limitative sense, the following:
Figure 1 shows an elevational side view of a straight track section, in trapezoidal section, which later will receive on it the device for detecting the passing of a railway vehicle shaft with the brake applied, which is the object of the invention.
Figure 2 shows a view similar to that illustrated on Figure 1, showing the moving rail section with its corresponding support incorporated on the track, which later will be the object of the invention.
Figure 3 shows a new view of the object illustrated on Figure 2, in which all the necessary elements constituting the device for detecting the passing of a railway vehicle shaft with the brake applied, which is the object of the invention, have been incorporated.

### DETAILED DESCRIPTION OF PREFERRED EMBODIMENT

From these figures, it can be seen how the device for detecting the passing of a railway vehicle shaft with the brake applied is constituted from a trapezoidal-shaped cut (8) on the rail (7) - constituting a straight track section, which is located between two preferably wooden rail bearers (1), (2), these rail bearers being joined in a conventional way to the track through corresponding supporting links (3), (4) fitted with appropiate screws (5), (6).

The rail section is reinforced by welding some plates (9) joining and stiffening the resultant ends of the previously made trapezoidal cut.

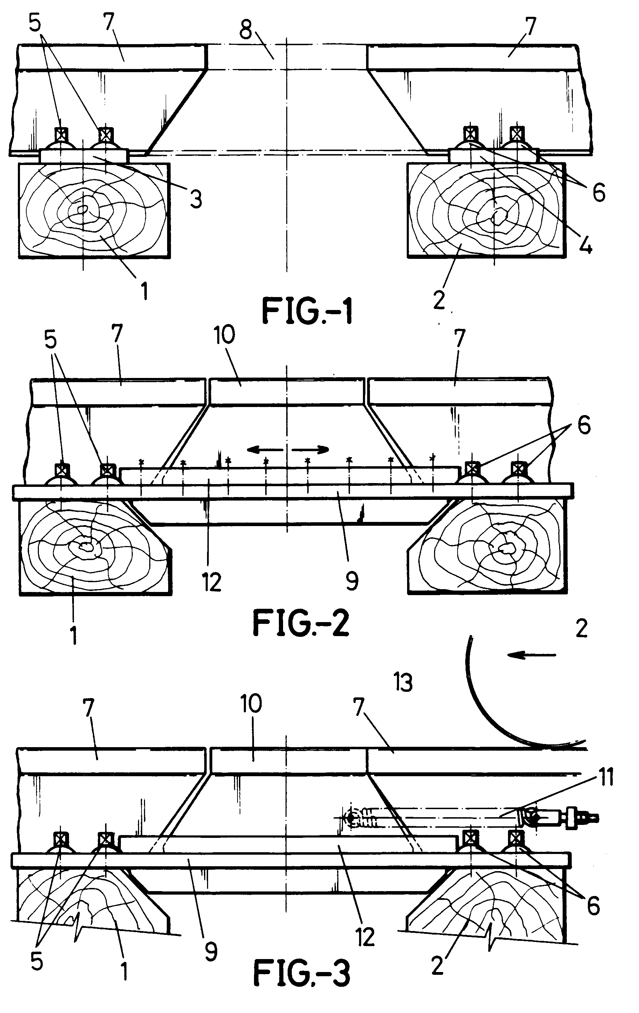

On plates (9), the rail section (10) will rest, so giving a continuity to the running track, as shown in Fig.2.

On the supporting plates (9), a rail section (10) fits into the trapezoidal shaped cut (9), previously made on the straight track section (7), this part being leant on the support (9) thru a set of rollers of small diameter offering scant rolling resistance, and, at the same time, are capable of supporting the shaft passing having a weight of until 22 tons.

The set of rollers of small diameter is housed in the supporting plate (9) and on it a moving rail (10) is arranged, which is laterally guided by plates made of sliding material and by means of longitudinal flanges (12) so assuring the correct positioning of the moving rail section (10) in its housing.

Through a driving spring (11) the moving rail (10) is immobilized on the side which is to receive the vehicle (13) to be checked.

This operation is illustrated in Figure 3.

Nothing will happen when the railway vehicle (13) passes on, provided that the wheel runs freely, since the moving rail (10) will remain immobilized by the small tensioning of precompression given to the spring (11), and the moving rail will not be displaced.

The spring pretensioning (11) can be adjusted, and this adjustment will be always slightly higher than the tangential force generated between the wheel rim and the rail, this force being necessary to overcome the rolling friction.

Nevertheless, when an additional tangential force is created between wheel and rail, owing to the fact that the wheel is supporting a braking couple, said force will overcome the spring pretensioning, and a longitudinal displacement of the moving rail (10) section will be created in the sense in which the vehicle (13) moves.

A microbreaker (not shown in Figures) has been arranged on the supporting plate, and a driving stop, fixed to the moving rail, so that when a displacement in created on the moving rail (10), said microbreaker is energised, so obtaining an electrical signal indicating the existing anomaly on a shaft of the railway vehicle (13), exactly on its braking system.

In order to protect the system from harmful weathering agents, and consequently, to avoid the entry of foreign matters which could affect the operation, metallic protections screwed on the longitudinal flanges (12) have been provided.

It is considered necessary to extend more this description for an expert in the art to understand the scope of the invention and the advantages derived from it.

The materials, shape, size and arrangement of the components will be open to variation, provided that it does not imply any alteration to the essence of the invention.

The terms under which this specification has been described should be taken in an ample and non limitative sense.

## Claims

1. A device for detecting the passing of a railway vehicle shaft with the brake applied of those destined to allow to detect the presence of an applied brake in a railway vehicle when one of its wheels passes on it, characterized in that it is constituted from a trapezoidal shaped cut (8) made on a straight rail section (10), preferntly located on wooden rail bearers (1), (2), the straight rail section (7) being reinforced by means of plates (9) which joined by welding, stiffen the resultant ends of the cut (8) and on which the rail section (7) giving continuity to the - running track rest.

2. A device for detecting the passing of a railway vehicle shaft with the brake applied, according to claim 1, characterized in that a section of rail (10), similarly configured as the cut (8), is arranged on the support (9) and leaned on the own support by means of a set of rollers of small diameter and offering scarce rolling resistance, the set of rollers being **housed** in the support plate (9) and on which the moving rail (10) is arranged and being laterally guided by means of plates made of a sliding material and relying on longitudinal flanges (12).

3. A device for detecting the passing of a railway vehicle shaft with the brake applied, according to any of the preceding claims, characterized in that it has a driving rings which is positioned on a side of the moving rail (10) receiving the railway vehicle, remaining immobilized owing to a small tensioning of precompression given to the ring, the spring being liable to be adjusted in regard to its pretensioning, which will always be slightly higher than the tangential force generated between the wheel rim and the rail.

4. A device for detecting the passing of a railway vehicle shaft with the brake applied, according to claim 3, characterized in that when an additional tangential force is generated between wheel and rail, owing to the fact that the wheel is supporting a braking couple, this force will overcome the spring pretensioning and a longitudinal displacement of the moving rail section will be created in the sense in which the vehicle moves, a microbreaker being arranged on the supporting plate, as well as a stop for energising it, so that when a displacement is created on the moving rail, said microbreaker is energised, so obtaining an electric signal.

5. A device for detecting the passing of a railway vehicle shaft with the brake applied, according to any of the preceding claims, characterized in that in order to protect the device from harmful weathering agents and to avoid the entry of foreign matters, metallic protections screwed on the longitudinal flanges (12) are provided.
